# EUROPEAN PATENT SPECIFICATION

(11) **EP 4 352 921 B1**
(45) Date of publication and mention of the grant of the patent: **19.02.2025**
(21) Application number: 22734226.8
(22) Date of filing: 03.06.2022
(51) Int. Cl.: H04L 12/12

(54) **APPARATUS FOR CONTROLLING AN ADDING OF A THIRD PARTY DEVICE**
VORRICHTUNG ZUR STEUERUNG DER HINZUFÜGUNG EINER DRITTVORRICHTUNG
APPAREIL DE COMMANDE D'UN AJOUT D'UN DISPOSITIF TIERS

(30) Priority: 08.06.2021 US 202163208033 P; 17.06.2021 EP 21179937
(43) Date of publication of application: 17.04.2024
(73) Proprietor: Signify Holding B.V., 5656 AE Eindhoven (NL)
(72) Inventor: KRAJNC, Hugo, José, 5656 AE Eindhoven (NL); DEIXLER, Peter, 5656 AE Eindhoven (NL); STEVENS, Hendrik, 5656 AE Eindhoven (NL); ROZENDAAL, Leendert, Teunis, 5656 AE Eindhoven (NL); DE VREEZE, Pieter, Diederik, 5656 AE Eindhoven (NL); VAN DER HEIJDEN, Gerardus, Wilhelmus, Theodorus, 5656 AE Eindhoven (NL)
(74) Representative: Verweij, Petronella Daniëlle
(86) International application number: PCT/EP2022/065159
(87) International publication number: WO 2022/258508

(56) References cited:
- WO-A1-2020/107067
- US-A1- 2013 320 212
- US-A1- 2019 140 908

## Description

### FIELD OF THE INVENTION

The invention relates to an apparatus, a network comprising the apparatus, a method and a computer program product for controlling an adding of a third party device to a radiofrequency sensing group.

### BACKGROUND OF THE INVENTION

Passive radiofrequency sensing allows devices to form sensing areas where the wireless signals propagating among those devices can be affected by certain events, for instance, human motion, fall, breathing, etc. These devices therefore create sensing areas, wherein all the devices performing radiofrequency sensing in the sensing area form a radiofrequency sensing group in which each device of the group contributes in some way to a data sampling process to feed the radiofrequency sensing algorithm.

In many cases, adding more nodes to a radiofrequency sensing group is beneficial. For example, new devices might be placed in different physical locations in a space, increasing the sensing area and thus a potential sensing coverage of the space either in coverage or in sensing reliability, or both. Moreover, the new devices can add sensing links with respect to the already existing ones. Thus, although it depends on the actual system setup, in most cases adding new devices increases the amount of sensing links significantly. In particular, new devices might provide a higher immunity to noise by establishing the additional and/or more stable links than the already existing ones. Furthermore, an additional device can create a redundancy in the radiofrequency sensing group that can be used, for instance, in a fallback scenario when one of the devices is out of order or not reachable.

However, there are some practical limitations to this increase in devices belonging to a radiofrequency sensing group. For example, as the amount of sensing links in a sensing group increases, also the amount of wireless traffic generated increases, which can "clog" the network and/or disproportionally increase the amount of memory needed by the device system, for instance, the memory needed by each device and/or the memory needed by a central processing unit of the radiofrequency sensing group. Therefore, while adding new devices to a radiofrequency sensing group is in general beneficial for the sensing performance, it would be advantageous to avoid possible drawbacks and ensure a proper radiofrequency sensing.

It would thus be beneficial if new devices, in particular, third party devices, could be added to a radiofrequency sensing group in a way that ensures that the radiofrequency sensing of the radiofrequency group is improved.

US2019/140908A1 discloses methods for performing radio frequency sensing in an entire group of radio frequency sensor, each sensor operating in a different frequency range, in order to allow a better terminal detection. When a new terminal is detected by any sensor of the group of sensors, it is determined if the terminal is authorized to access the group. If the requirements are fulfilled, the terminal is added to the group.

### SUMMARY OF THE INVENTION

It is an object of the present invention to provide an apparatus, a network comprising the apparatus, a method and a computer program product that allow for the controlling of an adding of a third party device to a radiofrequency sensing group such that the radiofrequency sensing of the radiofrequency sensing group is improved.

In a first aspect of the present invention, an apparatus for controlling an adding of a third party device to a radiofrequency sensing group is presented, wherein the radiofrequency sensing group consists of a plurality of network devices performing radiofrequency sensing in an area, wherein the third party device is adapted to provide a functionality that allows to contribute to a radiofrequency sensing of the radiofrequency sensing group, wherein the apparatus comprises a) a critical sensing functionality determination unit for determining a critical sensing functionality for the radiofrequency sensing currently performed by the radiofrequency sensing group, b) a contribution determination unit for determining a potential contribution that the functionality of the third party device can provide to the radiofrequency sensing of the radiofrequency sensing group, when the third party device is added to the radiofrequency sensing group, and c) a controlling unit for controlling the adding of the third party device to the radiofrequency sensing group based on the determined critical sensing functionality and the determined potential contribution to the radiofrequency sensing of the radiofrequency sensing group.

Since the critical sensing functionality for the radiofrequency sensing of the radiofrequency sensing group and a potential contribution of the third party device to the radiofrequency sensing group are determined and since the controlling unit is adapted to control the adding of the third party device to the radiofrequency sensing group based on the determined critical sensing functionality and the determined potential contribution to the radiofrequency sensing of the radiofrequency sensing group, it can be ensured that the potential contribution to the radiofrequency sensing when adding the third party device does not disturb the critical sensing functionality. In particular, it can be determined whether the potential contribution of the third party device is beneficial to the radiofrequency sensing of the radiofrequency sensing group in view of the determined critical sensing functionality. Thus, it can be ensured that while adding the third party device the radiofrequency sensing of the radiofrequency sensing group is improved.

The apparatus is adapted to control an adding of a third party device to a radiofrequency sensing group. The radiofrequency sensing group consists of a plurality of network devices performing the radiofrequency sensing in an area. Generally, the plurality of network devices refers to at least two network devices, more preferably, to at least three network devices. In an embodiment, the radiofrequency sensing group can be or can be part of a lighting system, in which case at least some of the network devices can be lights whose light output is controlled based on the sensing result of the radiofrequency sensing. However, the network devices can also refer to devices providing other functionalities than a light functionality. For instance, the radiofrequency sensing group may be or may be part of a smart home system, in which case the network devices can be smart home devices executing a function in a home or office of the user, for instance, based on the radiofrequency sensing results.

Generally, the radiofrequency sensing group is formed by all devices that contribute to a radiofrequency sensing in the area. For example, a device can contribute to a radiofrequency sensing in an active or passive way and thus can be an active or passive member of the radiofrequency sensing group. As active contribution to the radiofrequency sensing can be regarded if a device not only sends radiofrequency signals, for instance, for network communication purposes, but also detects radiofrequency signals sent from other devices and provides these detected radiofrequency signals to a radiofrequency sensing algorithm that based on all detected radiofrequency signals determines the radiofrequency sensing results. A passive contribution to a radiofrequency sensing group can be regarded as a contribution in which a device only sends radiofrequency signals that, in particular, do not have to be sent specifically for radiofrequency sensing purposes. A passive device might also receive radiofrequency signals, for instance, for network communication purposes, but is not configured to providing these received radiofrequency signals to a radiofrequency sensing algorithm for further analyses. In particular, a passive network device does not even have to be aware that it is contributing to a radiofrequency sensing of a radiofrequency sensing group. Thus, the adding of the third party device to the radiofrequency sensing group can refer to adding the third party device as an active device to the radiofrequency sensing group or add the third party device as a passive device to the radiofrequency sensing group. Generally, a third party device is regarded as being added to radiofrequency sensing group if it provides a contribution to the radiofrequency sensing of the radiofrequency sensing group. This contribution can refer to the utilizing of the radiofrequency signals provided by the third party device, for instance, in case that the third party device is added as a passive device, and/or also to the detecting of radiofrequency signals from at least one of the network devices by the third party device and providing the detected radiofrequency signal to the radiofrequency sensing algorithm analyzing the radiofrequency sensing of the radiofrequency sensing group, for instance, if the third party device is added as an active device.

Generally, a third party device can be any device that has not explicitly been configured for being utilized in the radiofrequency sensing group formed by the network devices, in particular, that has not been configured specifically to work together with the network devices forming the radiofrequency sensing group. For example, the third party device can refer to a device from a production line different than the production line of the network devices already forming the radiofrequency sensing group. The third party device can also refer to a legacy device that is based on an outdated technology or a device that is more technically advanced than the network devices already forming the radiofrequency sensing group. Preferably, the third party device refers to a device being produced by a manufacturer different from the manufacturer of the network devices of the radiofrequency sensing group. However, the third party device can also be from the same manufacturer but from a different production line or application system. For example, the network devices of the radiofrequency sensing group can refer to a luminaire system belonging to an application system in which all devices produced with respect to this application system are configured to work together in a radiofrequency sensing group for performing radiofrequency sensing, whereas the third party device belongs to a different application system that is not specifically configured to work together with the application system to which the network devices belong. Thus, generally, the third party device refers to a device for which a compatibility or interoperability with the radiofrequency sensing group network devices is not guaranteed.

Generally, the third party device is adapted to provide a functionality that allows to contribute to a radiofrequency sensing of the radiofrequency sensing group. In particular, the functionality can refer to any functionality that comprises the generation and/or detection of radiofrequency signals that can be utilized for radiofrequency sensing. However, the functionality is not necessarily dedicated to be utilized for radiofrequency sensing. For example, a third party device being part of a network can be adapted to communicate with other network devices of the network utilizing radiofrequency signals, wherein at least the communication radiofrequency signals can also be utilized for radiofrequency sensing. In a preferred embodiment the third party device is part of the same network as the network devices, for instance, of the same home network of a user or of an office network utilized in an office building. In a further preferred embodiment the third party device is linked to the same user account as the network devices indicating that the third party device is owned by the same person or company as the network devices. This allows to ensure the data security of the data produced during the radiofrequency sensing.

The critical sensing functionality determination unit is adapted to determine a critical sensing functionality for the radiofrequency sensing currently performed by the radiofrequency sensing group. Generally, radiofrequency sensing can be performed with respect to a plurality of different applications and different sensing goals, wherein each of these applications and sensing goals requires a different configuration of the radiofrequency sensing. For example, if the sensing goal refers to a simple presence detection for controlling the lights in a room, the accuracy of the detection is not necessarily very high and the algorithm used for the radiofrequency sensing can, for instance, be based simply on an RSSI value of the different radiofrequency signals. However, more advanced applications, for instance, a breathing monitoring of a sleeping child in a specific area, will often require a much higher accuracy together with a respective spatial resolution. In such cases the radiofrequency sensing can be performed based on an algorithm using a CSI of the radiofrequency signals wherein additionally specific signal path are weighted stronger than other signal path. Generally, the differences in the radiofrequency sensing and the specific configurations of the radiofrequency sensing to a specific application and sensing goal can be regarded as different radiofrequency sensing modes. Accordingly, as becomes apparent from the examples above, each radiofrequency sensing mode has different requirements with respect to the radiofrequency signals that are utilized as input for the radiofrequency sensing algorithm used in the radiofrequency sensing mode. For example, for some radiofrequency sensing modes it might be very important that a signal to noise ratio does not lie above a certain threshold, whereas for other radiofrequency sensing modes it might be more important that the amplitudes of the radiofrequency sensing signals do not lie below a certain threshold. In some cases, specific radiofrequency signal paths are essential to the sensing whereas in others a good coverage of an area is more important. Accordingly, each radiofrequency sensing mode can be regarded as comprising a critical sensing functionality that is essential for the currently performed radiofrequency sensing. The critical sensing functionality of a radiofrequency sensing currently performed by a radiofrequency sensing group, i.e. of the radiofrequency sensing mode performed by the radiofrequency sensing group, thus refers to a sensing functionality that is critical to achieving the current goal of the application of the current radiofrequency sensing.

The critical sensing functionality determination unit can be adapted to determine the critical sensing functionality based on knowledge with respect to the currently performed radiofrequency sensing of the radiofrequency sensing group. Preferably, the radiofrequency sensing group is adapted to perform the radiofrequency sensing based on different radiofrequency sensing modes, for example, utilizing different algorithms related to different intended sensing purposes, wherein the critical sensing functionality is determined with respect to a currently utilized radiofrequency sensing mode. The radiofrequency sensing group can then be adapted to determine the critical sensing functionality with respect to a current utilized radiofrequency sensing mode, for instance, based on an analysis of the utilized sensing algorithm. For example, known mathematical analysis methods can be utilized by the critical sensing functionality determination unit to analyze the stability of a radiofrequency sensing algorithm with respect to different radiofrequency signal inputs. However, the critical sensing functionality determination unit can also be adapted to utilize a machine learning technique to learn with time based on external events which sensing functionalities are critical with respect to a currently utilized sensing mode. For example, in a case in which the radiofrequency sensing mode should monitor the presence or absence of a person in a room for controlling the lights of the room positive or negative events can be utilized for training the machine learning algorithm. In such a case, for instance, a positive event can be an event in which the currently utilized radiofrequency sensing algorithm correctly detected the presence of a person and switched on the light, whereas a negative event can be an event in which the radiofrequency sensing algorithm failed to detect the presence of the person and the person had to switch on the light manually. Based on an analysis of a plurality of such events machine learning techniques allow to determine which sensing functionalities, for instance, which characteristics of the radiofrequency sensing signals, are critical to increase the number of positive events and to avoid or minimize the number of negative events.

In a preferred embodiment the critical sensing functionality determination unit is adapted to utilize a mapping between radiofrequency sensing modes and sensing functionalities critical for the respective sensing mode for determining the critical sensing functionality. Such a mapping can be provided, for instance, in form of a lookup table provided to the critical sensing functionality determination unit. In particular, such mappings can be provided by a manufacturer of the network devices utilized in the radiofrequency sensing group for all radiofrequency sensing modes that can be performed by the network devices when forming a radiofrequency sensing group. For example, the mapping can be acquired based on respective experiments, an experience of a user or manufacturer of the system, and/or based on a respective analysis of the utilized sensing algorithms. This embodiment has the advantage that it is less computational expensive and can be easily integrated also on computational systems that do not provide enough computational power to run a full machine learning or analysis algorithm.

Generally, the critical sensing functionality can refer to any characteristic of the radiofrequency signals utilized for radiofrequency sensing and/or characteristic of other features related to radiofrequency sensing. Preferably, the critical sensing functionality can refer to any of a stability of a RSSI and/or a CSI signal over time, a directionality and/or sensitivity of radiation patterns, a stability of an amplitude and/or a phase of a radiofrequency signal, and a stability of a transmit channel or sub-channel frequency and/or bandwidth. Moreover, the critical sensing functionality can also refer to a stability of a transmission frequency referring to how often a device emits or receives a radiofrequency signal. For example, for some radiofrequency sensing modes it might be important, i.e. critical, to sample an environment with a certain regular frequency, such that knowing whether a third party device can provide radiofrequency signals, for instance, every 200ms +/- 2 ms can be important for deciding whether the third party device can contribute to the radiofrequency sensing of the radiofrequency sensing group.

The contribution determination unit is adapted to determine a potential contribution that a functionality of the third party device can provide to the radio frequency sensing of the radiofrequency sensing group. Generally, the potential contribution that the functionality of the third party device can provide to the radiofrequency sensing can refer to any possible contribution to a radiofrequency sensing. For example, a functionality of the third party device allows the third party device to send radiofrequency signals, for instance, for communication with a network or as dedicated radiofrequency signals for radiofrequency sensing. This functionality can thus be utilized for the radiofrequency sensing of the radiofrequency sensing group and the potential contribution to the radiofrequency sensing of the radiofrequency sensing group in this case could be the providing of additional radiofrequency signals, for instance, from a direction that is currently not covered by the radiofrequency sensing group or to adding a further radiofrequency signal path to a difficult, for example, cluttered, area.

The contribution determination unit can be adapted to determine the potential contribution, for instance, based on provided knowledge on the characteristics of the functionalities of the third party device and/or based on environmental information. The information or the provided functionalities of the third party device can be provided, for instance, in form of a stored mapping between third party devices and the respective functionality that is utilizable for radiofrequency sensing. Such a mapping can be provided, for instance, by a manufacturer of a third party device and can be stored, for instance, on a storage, for instance, a cloud storage, to which the contribution determination unit has access. However, information on a possible functionality of the third party device that can be utilized for radiofrequency sensing can also be acquired by the contribution determination unit by communicating, for instance, via a network communication, with a third party device. For example, the contribution determination unit can be adapted to request a list with all possible functionalities related to radiofrequency sensing, when the third party device is adapted to respond to such a request by providing the respective list. Moreover, the contribution determination unit can also be adapted to infer possible functionalities of the third party device and potential contributions of the third party device by utilizing active or passive detections of radiofrequency signals of the third party device, for instance, provided by one or more of the network devices of the radiofrequency sensing group. For example, one or more of the network devices can be adapted to actively request the third party device to send a radiofrequency signal and/or to simply passively listen to provided radiofrequency signals of the third party device. Thus detected radiofrequency signals of the one or more network devices can then be utilized by the contribution determination unit to determine a potential contribution of the radiofrequency signal sensing functionality of the third party device to the radiofrequency sensing, for instance, based on an analysis of the radiofrequency signal. Information on the environment of the third party device can also contribute to determine a potential contribution of the functionality of a third party device and can also be provided to the contribution determination unit in form of already stored information. For example, environmental information indicating a position of the third party device in relation to the network devices of the radiofrequency sensing group, a potential direction of radiofrequency signals sent by the third party device, a position of fixed elements in the environment of a third party device in relation to the network devices of the radiofrequency sensing group, for instance, of walls, doors, windows, etc. can be inferred from an installation plan used during the installation of the network devices and the third party devices, can be provided as input by a user, or can be provided as measurements, for instance, inferred from images of the environment. Such environmental information can then, for instance, be combined with the information on the functionality of the third party device provided by a stored mapping and can then be used to determine the potential contribution of the functionality of the third party device. For example, a distance of the third party device to one or more of the network devices can be determined and can be used together with knowledge on a strength of the radiofrequency signal sent by the third party device to determine which areas between the third party device and one or more of the network devices could be covered when adding the radiofrequency signals of a third party device to the radiofrequency sensing of the radiofrequency sensing group. If more information on the environment is available, the contribution determination unit can also be adapted to take possible obstacles between the third party device and the network devices into account and to estimate an influence of these obstacles on the respective functionality of the third party device, for instance, on radiofrequency signals provided by the third party device. However, in particular, if a potential contribution of the functionality of the third party device is determined by the contribution determination unit based on measurements of the functionality by one or more network devices, for instance, based on measurements of provided radiofrequency signals of the third party device by one or more network devices, utilizing environmental information can be omitted, since the measurements already allow to infer the possible contribution to the radiofrequency sensing directly.

The controlling unit is then adapted to control the adding of the third party device to the radiofrequency sensing group based on the determined critical sensing functionality and the determined potential contribution to the radiofrequency sensing of the radiofrequency sensing group. In particular, the controlling comprises determining whether or not the third party device is added to the radiofrequency sensing group and, if the third party device is added, which of the determined potential contributions are to be utilized when the third party device is added to the radiofrequency sensing group. Moreover, the controller can also be adapted to control the network devices of the radiofrequency sensing group after the adding of the third party device, for instance, such that one or more of the network devices of the radiofrequency sensing group are removed from the radiofrequency sensing group or such that when the third party device is added the performing of the radiofrequency sensing of the network devices of the radiofrequency sensing group is changed. For controlling the adding of the third party device the controlling unit can be adapted, for instance, to compare the determined potential contribution of the third party device with the determined critical sensing functionality. For example, the controlling unit can be adapted to compare characteristics of a radiofrequency signal of the third party device which could potentially contribute to the radiofrequency sensing of the radiofrequency sensing group with determined requirements for the radiofrequency signal, for instance, determined thresholds, that have been determined as critical sensing functionality. In this example, if the controlling unit determines that the potential contribution of the third party device, in this case, the characteristics of the radiofrequency signal, fulfill the requirements of the critical sensing functionality that the third party device is added to the radiofrequency sensing group. However, if the controlling unit determines, for instance, with respect to some directions of the radiofrequency signal, for instance, due to obstacles in the way of the radiofrequency signal from the third party device to one or more of the network devices, that the requirements are not fulfilled, the controlling unit can be adapted to either not add the third party device to the radiofrequency sensing group or add the third party device to the radiofrequency sensing group utilizing for the radiofrequency sensing only the radiofrequency signals in directions that fulfill the requirements. Preferably, the control unit can utilize predetermined decision criteria for controlling the adding of the third party device. For instance, the decision criteria can be provided as a decision map, mapping critical functionalities to a decision sequence of potential contributions. For example, the decision map can indicate that for a critical functionality a specific potential contribution functionality is more preferred than another specific potential contribution functionality, if both are available.

In an embodiment, the determination of a potential contribution of the functionality of the third party device to the radiofrequency sensing of the radiofrequency sensing group comprises assessing a reliability of the potential contribution of the third party device, wherein the controlling unit is adapted to control the adding of the third party device further based on the reliability. In particular, if the potential contribution of the third party device can have an influence on the critical sensing functionality, by assessing a reliability of the possible contribution it can be ensured that the third party device is only added to the radiofrequency sensing group if the potential contribution of the third party device provides a suitable reliability. Generally, the reliability of the potential contribution can refer to the reliability of any characteristics of the potential contribution, in particular, to the stability of the respective characteristic over time. For example, the reliability of a potential contribution of a third party device can be determined such that it is indicative for the stability of the characteristics of the radiofrequency sensing signal over time. In an embodiment the reliability of a potential contribution of the third party device can be determined based on known metadata of the third party device. The metadata can, for instance, refer to the type of a third party device, a manufacturing identification of a third party device, a device name or device type, etc. For instance, in this case the reliability can be determined by providing a simple mapping table mapping the metadata of the third party device to a predetermined reliability. Such a mapping table can, for instance, be provided by utilizing information provided by a manufacturer of a third party device, information regained by experiments with the respective third party device, theoretical considerations with respect to the technical requirements of specific types of third party devices, etc.

In a preferred embodiment the reliability of the potential contribution of the third party device is determined based on measurements of characteristics of the functionality referring to the potential contribution. For example, to determine whether a radiofrequency signal provided by the third party device as potential contribution comprises a stable characteristic that can be utilized for the radiofrequency sensing and is thus reliable, the contribution determination unit can be adapted to utilize a measurement of the radiofrequency signal over a determined time span and to determine a respective stability of one or more characteristics of the radiofrequency signal over the time span. In particular, such a measurement can be performed during times in which no strong disturbances of the functions of the third party device are expected, for instance, during the night in an office building. Whether or not the third party device is reliable, in particular, stable enough to not disturb the critical functionalities of the radiofrequency sensing when added to the radiofrequency sensing group, can be determined based on respective defined stability criteria, for instance, thresholds, defined for the respective characteristics of the functionality.

Preferably, the contribution determination unit is adapted to determine the reliability of the potential contribution of the functionality in cooperation with a user, wherein the contribution determination unit is adapted to provide instructions to the user to be performed during the cooperation. For example, the contribution determination unit can be adapted to provide as instructions to the user questions with respect to the type, functionality, or usage of the third party device that should be answered by the user to provide the information that can be utilized for determining the reliability. Moreover, the contribution determination unit can also be adapted to provide as instructions to a user questions that refer to an experience of the user with respect to the third party device, for instance, if the third party device is already used for radiofrequency sensing. A user can then be prompted to indicate how reliably the user assesses the radiofrequency function of the third party device in the past. In a more complex embodiment, the contribution determination unit can also be adapted to provide as instructions to the user certain instructions with respect to actions of the user, wherein the contribution determination unit can than utilized measurements of the characteristics of the functionality referring to the potential contribution of the third party device performed during these actions of the user. For example, the instructions can indicate to a user to walk in front of the third party device for a few times such that the characteristics of the radiofrequency signal and one or more network devices of the radiofrequency sensing group can be measured during the action of the user and the contribution determination unit can then be adapted to determine whether the radiofrequency signal provided by the third party device can be reliably utilized during a radiofrequency sensing. Thus, providing instructions to the user allows to base a determination of the reliability of the potential contribution of the functionality on concrete situations that might be related to the current sensing goal of the radiofrequency sensing group. This allows for a more accurate determination of the reliability of the potential contribution, in particular, with respect to the critical functionality for the radiofrequency sensing currently performed.

In a preferred embodiment, the reliability of the potential contribution of the third party device is determined based on a classification of the third party device, wherein the potential contribution determination unit is adapted to classify the third party device into a set of predetermined device archetypes, wherein each device archetype represents a group of radiofrequency capable devices with similar characteristics of respective functionalities. The architypes can be defined, for instance, based on theoretical considerations with respect to the generally known functions of a device architype or, for instance, based on experiments made with different devices to determine respective architypes. Generally, the architypes can be differentiated, for instance, based on the characteristics of respective potential functionalities of the devices and each of the architypes can be associated with a specific reliability of the potential contribution of the third party device. The potential contribution determination unit can then be adapted to classify a specific third party device into one or more of the architypes, for instance, based on metadata of the third party device, information on the type of functionality of the third party device, wherein a mapping can be provided that maps certain types of third party devices into the respective architypes. In a preferred embodiment, the archetype classification is based on characteristics of the functionality that have an impact on a radiofrequency sensing performed based on radiofrequency signals provided by the third party device. Generally, new third party device types that are not already part of the classification can be classified by the contribution determination unit, for instance, based on provided information on the respective new device type. This information can be provided, for instance, by a user or by a manufacturer of the respective new device type.

In an embodiment, the potential contribution determination unit is further adapted to determine a confidence metric for a plurality of permutations of network devices and the third party device performing radiofrequency sensing in a radiofrequency sensing group, wherein the controlling unit can be adapted to control the adding of the third party device based on the confidence metric. Optionally, the controlling unit can also be adapted to control the network devices, for instance, to remove a network device from the radiofrequency sensing group. For example, the controlling unit can be adapted such that the radiofrequency sensing group consists of network devices and optionally one or more third party devices for which a confidence metric is determined indicating of all permutations the highest confidence with respect to a radiofrequency sensing performance with respect to a current radiofrequency sensing goal. Preferably, the controlling unit is adapted to compare a determined confidence metric with a predetermined confidence threshold and to perform additional steps, like the adding of the third party device, only if the confidence metric lies above the confidence threshold. Preferably, the confidence metric is determined based on a determined reliability of a third party device and based on a verified performance of the radiofrequency sensing performed in the respective sensing group permutation. The verified performance can be determined based on user input, for example, a user indication how satisfied he/she is with the performance, or based on independent measurements, for example, utilizing infrared sensors that can verify a presents detection. However, the confidence metric can also be based only on a determined reliability or only based on the verified performance.

In an embodiment, the potential contribution determination unit further comprises determining a trust level for the third party device, wherein the trust level is indicative of a data security and/or stability provided by the third party device, wherein the controlling unit is adapted to control the adding of the third party device further based on the trust level. In particular, by further determining a trust level and adding the third party device further based on the trust level it can be ensured that only third party devices are added to the radiofrequency sensing that can be trusted. In particular, in radiofrequency applications often sensitive personal information is acquired during the radiofrequency sensing such that it is in the interest of a user to only utilize third party devices in a radiofrequency sensing group that provide a suitable data security. Further, it is also preferred that only third party devices are added to the radiofrequency sensing group that are stable in their behaviour and data security over longer time periods, to ensure the reliability of the radiofrequency sensing performed with a contribution of the third party device is reliably. For example, if it is known that a third party device receives firmware updates on a regular time scheduled basis, wherein this firmware updates might change the behaviour of a third party device with respect to data security, the trust level of the third party device would be regarded as being low due to the instability of the behaviour of the third party device. Generally, the trust level can be determined based on information provided by the third party device itself, for example, based on a request for this information, based on information provided by manufacturer with respect to the third party device, based on information provided by a user of the third party device, or based on any mapping specifically mapping known third party devices to a respective trust level, for instance, provided by the manufacturer of the apparatus or learned in the past.

In an embodiment, the apparatus further comprises a storing unit adapted for storing already determined information on a potential contribution of a third party device, wherein the storing unit is adapted to update the stored information if an external event indicates a possible change of the stored information. The external event can refer to any event that indicates a possible change of the stored information. For example, the external event can refer to an update with new information to certain third party devices. However, the external event can also refer to a measurement of the characteristics of the contribution of the third party device, wherein it is determined that these measurements are not in line with the already stored information on the third party device. Thus, the information on a potential contribution of the third party device is always kept up to date and can be utilized by the apparatus. For example, if a new radiofrequency sensing group is formed, the apparatus can be adapted to use the information already stored on the third party device and to directly determine if an adding of a third party device to the radiofrequency sensing group might improve the radiofrequency sensing of the radiofrequency sensing group.

In a further aspect of the invention, a network is presented, wherein the network comprises a) a plurality of network devices including a third party device, wherein at least a part of the plurality of the network devices forms a radiofrequency sensing group performing radiofrequency sensing in an area, and b) an apparatus according to any of the preceding claims.

In a further aspect of the present invention, a method for controlling an adding of a third party device to a radiofrequency sensing group is presented, wherein the radiofrequency sensing group consists of a plurality of network devices performing radiofrequency sensing in an area, wherein the third party device is adapted to provide a functionality that allows to contribute to a radiofrequency sensing of the radiofrequency sensing group, wherein the method comprises a) determining a critical sensing functionality for the radiofrequency sensing currently performed by the radiofrequency sensing group, b) determining a potential contribution that the functionality of the third party device can provide to the radiofrequency sensing of the radiofrequency sensing group, when the third party device is added to the radiofrequency sensing group, wherein the potential contribution refers to a functionality provided by the third party device, and c) controlling the adding of the third party device to the radiofrequency sensing group based on the determined critical sensing functionality and the determined potential contribution to the radiofrequency sensing of the radiofrequency sensing group.

In a further aspect of the invention, a computer program product for controlling an adding of a third party device to a radiofrequency sensing group is presented, wherein the computer program product is adapted to cause an apparatus as described above to perform a method as described above when run on the apparatus.

It shall be understood that the apparatus as described above, the network as described above, the method as described above and the computer program product as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily an embodiment of a network comprising an apparatus for controlling an adding of a third party device, and
Fig. 2 shows schematically and exemplarily an embodiment of a method for controlling an adding of a third party device.

### DETAILED DESCRIPTION OF EMBODIMENTS

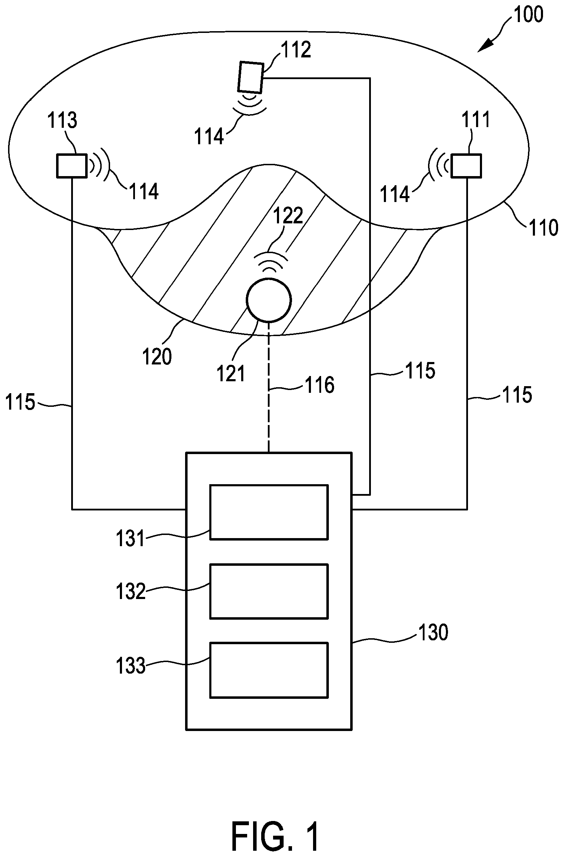

Fig. 1 shows schematically and exemplarily a network 100 comprising in this embodiment an apparatus 130 for controlling an adding of a third party device 121 to a radiofrequency sensing group 110. The network 100 comprises network devices 111, 112, 113 forming a radiofrequency sensing group 110, wherein the radiofrequency sensing group 110 is adapted to provide a radiofrequency sensing functionality in the area that is indicated by the delineation of the radiofrequency sensing group 110. The radiofrequency sensing of the radiofrequency sensing group 110 is performed by utilizing radiofrequency signals 114 and can refer, for instance, to a presence/absence detection, a physical parameter detection, like breathing or heart rate detection, an area monitoring, or other individualized radiofrequency functionality. The network 100 between the network devices 111, 112, 113 can be formed by any known wired or wireless network communication protocol, for instance, ZigBee, WiFi, Bluetooth, etc.

Optionally, the network further comprises a third party device 121. Generally, for the functioning of the described invention it is not necessary that the third party device 121 is part of the same network 100 as the network devices 111, 112, 113, however, being part of the same network 100 has the advantage that a communication, for instance, between one of the network devices 111, 112, 113, and the third party device 121 can be performed much easier as part of the network communication. Generally, the third party device 121 can be any device that is not normally intended to work together with the network devices 111, 112, 113 in a radiofrequency sensing group, for instance, due to being made by a different manufacturer, belonging to a different production line of the same manufacturer, being technologically inferior or superior to the network devices 111, 112, 113, or being owned by a different owner than the network devices 111, 112, 113. However, the third party device 121 generally is adapted to provide a functionality that allows to contribute to the radiofrequency sensing of the radiofrequency sensing group 110. For example, as indicated in Fig. 1, the third party device 121 can provide radiofrequency signals 122 that potentially allow to increase the sensing area of the radiofrequency sensing group 110 by the area 120 indicated by the dashed delineation. However, simply adding a third party device, like third party device 121, to the radiofrequency sensing group 110 when the third party device 121 provides a possible contribution to the radiofrequency sensing of the radiofrequency sensing group 110 can indeed lead to a decrease in the usability, accuracy and/or effectivity of the radiofrequency sensing of the radiofrequency sensing group 110. For example, if the provided radiofrequency signal 122 of the third party device 121 has a very low signal-to-noise ratio with respect to radiofrequency sensing, utilizing the radiofrequency signal 122, when adding the third party device 121 to the radiofrequency sensing group 110, can lead to an increased calculation time of the utilized radiofrequency sensing algorithm when trying to extract the respective information from the radiofrequency signal 122 and can further lead to inaccuracies in the detection result that are not desired.

In view of these difficulties, network 100 comprises apparatus 130 for controlling the adding of a third party device, like third party device 121, to the radiofrequency sensing group 110. The apparatus 130 can be realized generally in any form of hardware and/or software that can be part of a dedicated apparatus only providing the controlling functionality, can be part of an apparatus also providing other functionalities, or can be distributed throughout a plurality of devices, for instance, can be part of a cloud environment and distributed over a plurality of servers. The apparatus 130 is generally adapted to communicate with at least one of the network devices 111, 112, 113, for instance, as indicated by communication lines 115. The communication can be a wired or wireless communication. For example, the apparatus 130 can be part of the general network communication of the network 100, however the communication of the apparatus with the network devices 111, 112, 113 can also be different from the network communication, for instance, can follow a different communication protocol or a different communication type. Moreover, in some embodiments the apparatus 130 communicates with the network devices 111, 112, 113 via an intermediary, for instance, by communicating with the controller controlling the network and/or the network devices 111, 112, 113.

The apparatus 130 comprises a critical sensing functionality determination unit 131, a contribution determination unit 132 and a controlling unit 133. The apparatus 130 may further comprise a processor, which may be implemented as one of the units shown in Fig. 1, or distributed among the units, or implemented separately from the units shown. The critical sensing functionality determination unit 131 is adapted to determine a critical sensing functionality of the radiofrequency sensing currently performed by the radiofrequency sensing group 110. For example, the critical sensing functionality determination unit 131 can utilize a mapping function mapping critical sensing functionalities to the respective radiofrequency sensing modes that can be performed by the radiofrequency sensing group. Such a mapping can be provided, for instance, by the manufacturer of the radiofrequency sensing group and can be determined based on experience or experimental methods. A sensing functionality can generally be regarded as being a critical sensing functionality if one or more characteristics of the sensing functionality have to fulfil certain criteria in order to allow to perform the current radiofrequency sensing, i.e. the respective radiofrequency sensing mode, with a desired accuracy. For example, a critical sensing functionality determination unit can determine based on a mapping function that for an absence/presence detection the critical sensing functionality refers to providing a radiofrequency signal with a signal-to-noise ratio above a predetermined threshold. In another example, if the radiofrequency sensing currently performed refers to a radiofrequency sensing mode that refers to a breathing detection, a critical sensing functionality can refer to the providing a CSI signal at 5 GHz with a channel bandwidth higher than 80 MHz. Thus, the critical sensing functionality determination unit 131 provides information on which functionalities are generally critical for a currently performed radiofrequency sensing.

The contribution determination unit 132 is adapted to determine a potential contribution that the functionality of the third party device 121 can provide to the radiofrequency sensing of the radiofrequency sensing group 110, when the third party device is added to the radiofrequency sensing group 110. For example, the contribution determination unit can be adapted to utilize a predetermined mapping of a plurality of third party devices to respective contributions. However, the contribution determination unit 132 can also be adapted to communicate with the third party device 121, optionally via direct communication indicated by line 116, or via one or more of the network devices 111, 112, 113, wherein the response of the third party device 121 can be directly or indirectly indicative of functionalities and potential contributions of the third party device 121. For example, the third party device 121 can be adapted to provide on request a list of its functionalities and the contribution determination unit 132 can be adapted to determine one or more of the functionalities generally provided by the third party device 121 that can be utilized as potential contribution to a radiofrequency sensing. For example, the third party device 121 can provide information that indicates that the third party device is able to provide radiofrequency signals for network communication in a certain radiofrequency signal range. The contribution determination unit 132 can then be adapted to determine if the radiofrequency signals 122 that can be provided by the third party device 121 can potentially be used in a radiofrequency sensing and thus allow for a potential contribution to the radiofrequency sensing group 110. In the example provided in Fig. 1, the contribution determination unit 132 can be adapted to determine that the radiofrequency signals 122 refer to a potential contribution of the third party device 121 to the radiofrequency sensing group, that would in this example allow to increase the radiofrequency sensing area of the radiofrequency sensing group 110.

In a preferred embodiment, the contribution determination unit 132 is further adapted to assess a reliability of the potential contribution of the third party device 121. Also the reliability can in a simple embodiment be determined based on a predetermined mapping of possible third party devices to respective reliabilities of the functionalities provided by the third party devices. For example, the mapping can be provided by a manufacturer for known suitable third party devices and indicate that for a third party device of the same type as third party device 121 the radiofrequency signal functionality is regarded as reliable, for instance, since the radiofrequency signal is provided by the third party device 121 with reliable characteristics over a certain time period. However, the contribution determination unit 132 can also be adapted to utilize measurements of the characteristics of the functionality of the third party device 121 referring to the potential contribution in order to determine the reliability of the potential contribution. For example, the potential contribution determination unit 132 can utilize measurements of the radiofrequency signal 122 as performed, for instance, by network device 111 and can determine the characteristics of the radiofrequency signal 122 over a certain time period. For example, if these characteristics are substantially constant, or fulfil certain predetermined criteria with respect, for instance, to amplitude, frequency, bandwidth, signal-to-noise ratio, etc., the contribution determination unit 132 can be adapted to determine the radiofrequency signal functionality of the third party device 121 as reliable or otherwise as unreliable.

Moreover, also a user can be utilized for such measurements, for instance, the contribution determination unit 132 can provide, for instance, by communicating with an output unit connected with the user like a smartphone, instructions can be provided to the user that can facilitate the measurements. For example, an instruction can instruct the user to walk between the third party device 121 and the network device 111 and the contribution determination unit 132 can then be adapted to utilize the measured radiofrequency signal 122 before, during and after the user has walked between the devices to determine the reliability of the respective radiofrequency signal providing functionality of the third party device 121.

The controlling unit 133 is then adapted to control the adding of the third party device 121 based on the determined critical sensing functionality and the determined potential contribution and optionally further based on the reliability of the potential contribution. For example, the controlling unit 133 can compare the potential contribution functionality of the third party device 121 with the determined critical sensing functionalities and determine whether the determined potential contribution could infer with one or more of the critical sensing functionalities and, if this is the case, fulfils the requirements of the critical sensing functionality. For example, the controlling unit 133 can be adapted to compare the characteristics of the radiofrequency signal 122 of the third party device 121 that can potentially contribute to the radiofrequency sensing with the characteristics of a radiofrequency sensing signal that are critical to the currently performed radiofrequency sensing of the radiofrequency sensing group. If the radiofrequency sensing signal 122 fulfils the respective critical characteristics determined as critical sensing functionality, the controlling unit can be adapted to add the third party device 121 to the radiofrequency sensing group 110. However, if the characteristics do not fulfil the critical sensing functionality requirements, the control unit 122 can also be adapted to not add the third party device 121 to the radiofrequency sensing group 110. If further the reliability of the determined potential contribution is also determined and known, the controlling unit 133 can also use this reliability to determine whether to add or not add the third party device 121 to the radiofrequency sensing group 110. For example, if the determined potential contribution fulfils all requirements with respect to a critical sensing functionality but is, however, deemed unreliable, for example, since the characteristics of the radiofrequency signal 122 often strongly deviate from the nominal characteristics as intended by the manufacturer, the controlling unit 133 can be adapted to not add the third party device 121 due to the unreliable status. However, if, for instance, an update of the third party device 121 eliminates this deviation behavior, the contribution determination unit 132 can be adapted to change the reliability status of the third party device 121 that has been stored and the controlling unit 133 can be adapted to assess based on the new reliability status that an adding of the third party device 121 is now acceptable and can in this case be adapted to add the third party device 121.

Generally, the adding of the third party device 121 can refer to an active or passive adding of the third party device. In case of an active adding of the third party device 121, the controlling unit can be adapted to control the radiofrequency sensing group 110 such that the third party device 121 becomes an active member of the radiofrequency sensing group 110, for instance, actively sending and receiving radiofrequency signals to and from other network devices of the radiofrequency sensing group 110 and/or providing computational capacities for calculating the radiofrequency sensing results. However, if the third party device 121 is passively added to the radiofrequency sensing group 110, the third party device 121 itself cannot even be aware of participating in the radiofrequency sensing group 110. For example, in this case the radiofrequency sensing group 110 is adapted to only passively listen to, i.e. detect, the radiofrequency signals or other functionalities provided by the third party device 121. However, the network devices 111, 112, 113 of the radiofrequency sensing group 110 can in this case also be adapted to send signals to the third party device 121 from which it is known that the third party device 121 will automatically respond with providing a suitable radiofrequency signal 122 which can then be detected by one or more of the network devices 111, 112, 113.

After the adding of the third party device 121 in the example shown in Fig. 1, the radiofrequency sensing area can be increased while at the same time it is ensured that the accuracy of the radiofrequency sensing previously performed by the radiofrequency sensing group 110 alone is not decreased.

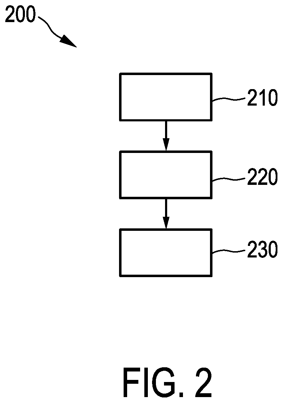

Fig. 2 shows schematically and exemplarily an embodiment of a method 200 for controlling an adding of the third party device. The method 200 can be performed, for instance, by a system as described above with respect to Fig. 1. Thus, the same principles as described above can also be applied to the method 200.

In a first step 210, the method 200 comprises determining a critical sensing functionality of the radiofrequency sensing currently performed by the radiofrequency sensing group, for instance, by radiofrequency sensing group 110. In step 220, a potential contribution of a functionality of the third party device is determined, when the third party device is added to the radiofrequency sensing group. Generally, the steps 210 and 220 can be performed independent of each other, in particular, can be performed in an arbitrary sequence or at the same time. In a last step 230, the method 200 comprises controlling the adding of the third party device to the radiofrequency sensing group based on the determined critical sensing functionality and the determined potential contribution to the radiofrequency sensing of the radiofrequency sensing group, for instance, as described above.

In the following, some more detailed examples of the apparatus with respect to specific applications will be described. In some applications and depending on the characteristics of a radiofrequency sensing network, network devices which are part of a radiofrequency sensing group might benefit from adding third party devices. For example, this could be due to an insufficient number of "own" network devices within that radiofrequency sensing group capable of sensing. Similarly, there may be "enough" network devices but still the performance is lower than expected, or the resources for the network devices are used for other applications, e.g. for performing an entertainment functionality. In these exemplary cases, third party devices present, for instance, from other vendors, in the area and meeting basic criteria could be used as additional members of the radiofrequency sensing group in the sensing area.

For example, if radiofrequency sensing is being performed by the radiofrequency sensing group based on Wi-Fi, other Wi-Fi third party devices which belong to a same home network may be used, if they are within range. Allowing the adding of third party devices in many cases provides a quick experience improvement to the user, and eliminates the user's feeling of being cornered by a specific supplier to buy a larger than expected amount of network devices only to get a reliable sensing performance. Moreover, reusability of different network devices can be quite attractive as proliferation of smart network devices increases. However, also third party devices not on the same network can also be used for radiofrequency sensing in the radiofrequency sensing group.

However, using third party devices might not be as reliable for a currently performed radiofrequency sensing as utilizing the already known network devices of the radiofrequency sensing group all specifically constructed to work together in such a radiofrequency sensing group. For instance, a currently utilized sensing algorithm, for example, as part of a currently performed sensing mode, may need specific inputs which a third party devices cannot provide. However, also the precise radiofrequency capabilities of the third party devices might not be known in detail to the radiofrequency sensing group or even, if known, might to allow for a respective fine tuning as needed. Hence, in current state-of-the art, adding a third party device for the sake of generating more data to ingest by the radiofrequency sensing algorithm in practice often generates more noise/variation than usable sensing metrics data, therefore being often counterproductive for the overall sensing performance.

In the above description exemplary methods are described that allow for choosing what metrics available from a third party device should be evaluated in order to determine whether or not to add the third party device to a radiofrequency sensing group for improving the radiofrequency sensing performance.

For example, as already described above, it can be determined, for a desired or currently performed radiofrequency sensing functionality, i.e. radiofrequency mode, of a certain radiofrequency group, for example, as critical sensing functionality, which of the transmitted/received radiofrequency parameters are most vital for the sensing performance. This determination can be based, for instance, on a mapping which radiofrequency parameter is related to which aspect of a detection performance of a currently performed radiofrequency mode. For example, it is necessary to extract channel state information at 5GHz with a channel bandwidth higher than 80MHz for a breathing detection mode, but already an received signal strength indicator at 2.4GHz and channel bandwidth of 20MHz is good enough for basic motion sensing.

Further, as already described above, possible, optionally positive, contribution of a provided functionality, for example, an additional signal quality data, becoming available due to the involvement of the third party device to the radiofrequency sensing mode can be determined. Optionally, further an impact of the possible contribution on the system reliability, for instance, by determining a reliability of the functionality or a trust level of the specific third party device, as described above, can be determined. Then, in the above example, it can be decided, for instance, by the control unit described above, which subset of the additional signal quality parameters provided when adding the third party device should actually be used by the radiofrequency sensing algorithm of the current sensing functionality, i.e. radiofrequency sensing mode.

The reliability and/or trust level can be determined, for example, by the contribution determination unit, based on information from external sources, for instance, based on information from a manufacturer, indicative of the reliability and/or trust level of a third party device. Further, additionally or alternatively the reliability and/or trust level can also be determined based on user activities, for instance, based on an input of the user indicative of a reliability and/or trust level. Moreover, the reliability and/or trust level can also be determined based on a time series of performance measurements, e.g. checking for a consistency of radiofrequency parameters over time.

The such determined reliability and/or trust level of a third party device can then be stored for later (re-)use either locally or by other installations encountering similar third party devices in a similar setup. Moreover, the reliability and/or trust level can also be updated on the respective storage, if a change of the currently stored reliability and/or trust level is indicated. For instance, often in practice, the hardware and/or software of third party devices is known to change, e.g. by the implementation of a new radio chip or software, without the model number changing. Hence, in practice past learnings often will only provide an indication for the reliability and/or trust level of a particular third party device.

In the following some more detailed examples for the processing of the apparatus will be given. Generally, a radiofrequency sensing group can be configured to run different types of radiofrequency sensing modes, for example, by using different sensing algorithms, at different times, such as detecting basic motion during the day, breathing patterns during the night, and depending on the present context even gestures and falls, etc. Each of these radiofrequency sensing modes can be sensitive in different ways to different functionalities, e.g. radiofrequency parameters of a channel, provided by the participating devices. For example, temporal drifts in RSSI/CSI might be relevant for breathing detection as breathing motion events take a long time to be determined, e.g. ~20 human breaths per minute, whereas they might go completely unnoticed when trying to determine falls to the ground, as those events take at most 1 or 2 seconds.

Thus, it is preferred that the apparatus, for example, the critical sensing functionality determination unit determines, for the specific set of sensing features currently being activated, i.e. for the currently performed radiofrequency sensing, which functionalities, e.g. RF parameters, are critical. These can be, for example, any of a stability of RSSI/CSI over time, e.g. SNR, drifts, temperature dependency, spatial vicinity to disturbances affecting the wireless multipath such as swinging curtains in the wind, etc., a directionality and sensitivity of radiation patterns, a stability of amplitude versus a phase of a radiofrequency signal, and a stability of transmitted channel or sub-channel frequencies and bandwidth.

Although a respective radiofrequency sensing mode, e.g. a respective sensing algorithm, might be sensitive to the above mentioned critical functionalities regardless of whether they are provided by a network device of the radiofrequency sensing group or a third party device within the radiofrequency sensing group, it can be regarded as an implicit assumption that detailed radio performance information about "own" devices of the radiofrequency sensing group are available to the radiofrequency sensing system. Hence, the above described invention mainly addresses how to deal with third party devices from which the system does not upfront know, for instance, a level of variations of the provided functionalities that can be expected.

Therefore, it is preferred that the apparatus, for example the contribution determination unit, determines not only a potential contribution of the third party device to the radiofrequency sensing of the radiofrequency sensing group, but also a reliability of the potential contribution. Multiple sources for determining a reliability of a contribution of a third party devices exist. For example, it can be assumed that the third party devices can be clustered first into archetypes, as devices belonging to the same archetype might exhibit similar behaviors and thus similar reliability. The archetype information can be determined by the apparatus, for instance, based on databases, information carried by the third party device itself and shareable within the communication protocol used, automatically retrieving a model of a radio chip and antenna from a test report on a Federal Communications Commission (FCC) website, e.g. based on the FCC ID printed on each product label, measurements in test-setups, or practical deployments, etc.

The apparatus, for instance, the contribution determination unit, can be adapted to classifying third party devices per archetype based on those product implementation characteristics most impactful for the radiofrequency sensing functionalities. For example, a simple split could be based on how much interference radiofrequency signals are exposed to when coming in/leaving a device, e.g. the radiofrequency signal passes through a fan of ceiling light with integrated fan paddles. In many cases, while the third party devices are already designed to maintain or ensure a certain radiofrequency performance, e.g. amount of messages dropped, throughput, etc., however, the inventors recognized that these optimizations may be suboptimal for radiofrequency sensing. For instance, if the ceiling fan may experience poor connectivity, it may dynamically try to smartly increase the transmit power or to change the communication channel, which would not be optimal when integrated into a radiofrequency sensing group.

In smart homes, large appliances are the most likely to suffer from the largest distortions to radiofrequency signals. Smart fridges, washing machines, TVs, etc. are usually bulky devices which contain large metallic objects or surfaces, sometimes even moving parts such as the rotating drum of the washing machine or dynamic presence of spray water inside the dishwasher, which can lead to the radiofrequency signals to not behave as if they were other types of devices, e.g. smart lights. In other cases, wall/ceiling mounted devices should be distinguished from free-standing/table-placed devices as they will always tend to have a more directional radiofrequency pattern due to the wall/ceiling they are mounted on, whereas the other free-standing devices will in practice have more of a uniform propagation. This is especially relevant for those device types which are typically mounted within a wall/ceiling such as in-wall switches resp. in-ceiling spots since these typically are surrounded by a lot of concrete and/or a metal. Accordingly, the archetype classification can take these differences into account and determine a reliability accordingly.

Further it is preferred that the apparatus, for example, the contribution determination unit, determined a trust level for the third party device. Generally, devices might instill different levels of trust from a security perspective. For example, although two smart speakers might be classified in an archetype for table-top-placed devices with little impact on a reliability of potential contributing functionalities, and therefore be preferable for radiofrequency sensing with respect to a smart fridge, the fact that one is made by a well-known brand might make that one speaker preferable over the second smart speaker which is made by a new start-up with no proven data security and quality standards.

Further, the archetype classification can be based on other criteria. For example, whether the third party device radiofrequency communication unit supports newer communication stacks or only older, legacy stacks. For instance, IPV6 is the IP standard since 2017, so availability of IPV6 support indicates that that the third party device is rather new and has an up-to-date IP stack. Also the supported Wi-Fi standard can be used for archetype classification. For example, a Wi-Fi type, e.g. Wi-Fi 1,2,3,4,5 or 6, discloses the on radio waveband, e.g. 2.4/5 GHz, and radio bandwidth, e.g. 11/54/600/6933/9608 Mbps. Devices with Wi-Fi 4 and higher allow to optionally provide multiple antennas in a device to exploit multipath propagation. Knowing that a third party device belongs to one of these archetypes with Wi-Fi 4 and higher implies that the RSSI/CSI provided by this third party device might provide more signal details for the radiofrequency sensing. Also a MAC address can be used for archetype classification. For example, the MAC address indicates the vendor of the device. A product of a well-known vendor or vendor with a good reputation, likely will experience fewer quality issues than a rather unknown vendor or vendor with bad reputation. By agreement with another vendor, it might also be possible to infer a device type, and/or specific details of the radiofrequency characteristics of that device.

Once the archetype classification described above is completed, the apparatus, for instance, the control unit can select not only which third party devices to add to the radiofrequency sensing group, but also which subset of potentially contributing functionalities, for instance, radiofrequency parameters, of the selected ones to use for the radiofrequency sensing. In particular, the selection is based on the critical functionality and thus strictly linked to the sensing modality currently used by radiofrequency sensing group. For example, if the group has been configured to perform basic motion sensing for an automate control of lights, the third party device selection process described above may conclude that, for instance, a wall mounted smart thermostat is a good option, as this type of devices is typically designed to be mounted on a wall, and as such the product design is most likely optimized for the radiofrequency signal propagating mostly towards the free air, i.e. the inside of a room. This means that this third party device type will be more sensitive to the motion within the room, and less sensitive to false positives from across the wall. On the other hand, a smart TV might be less of a good choice, due to it being either a large metallic object or having the antennas very close to the screen/display to decrease thickness, which is also sometime, but not always, placed against a wall. This placement results in the wireless signal being able to escape through the wall even if attenuated in the case of concrete walls and therefore be more sensitive to pick up of motion from the adjacent room/apartment.

In another example, if the radiofrequency sensing group has been configured to perform gesture recognition, a smart speaker might be a good choice as it is usually placed somewhere without too much clutter, e.g. to avoid the noise being muffled. As such, the smart speaker's radio might have good coverage of the surrounding space and hence can pick up gestures from any direction. On the contrary, a smart fridge might only have very directional propagation of the signal or a propagation where a specific direction of the radio transmission is suppressed by interaction of the radio signal with a large metallic part, meaning that only events occurring within the served radio propagation paths might be visible; this will limit the usefulness of including a smart fridge into the radiofrequency sensing group.

In other cases, only a part of the signal quality metrics becoming available due to the third party device can be useful, but not all of them. For example, if the exact archetype of the third party device is not known, e.g. because it was not possible to extract sufficient relevant metadata about the device, then the control unit might conclude that using RSSI might be good enough or harmless enough, as it is an aggregated and rather crude metric. However, relying on CSI data of radio communication involving this third party device might lead to some subcarriers having a stronger than desired influence in the algorithm and as such the third party device should be avoided for CSI sensing. At the very least the control unit could also evaluate the reliability and thus an impact on the radiofrequency sensing when using only a filtered out version of CSI in comparison with using the "blunt" RSSI.

Additionally, combinations of the above could also be utilized. For example, the apparatus, in particular, the control unit might conclude that for fall detection, as critical functionality the phase of the CSI signals is just as important as the amplitude, since it is known that the amplitude can more easily be affected by poor radiofrequency front-end designs. In this case, the apparatus, for instance, by utilizing the control unit, can be adapted to use an unidentified third party device to contribute to fall detection, but only by using the phase elements of the CSI data involving the third party device. Similarly, the apparatus can be adapted to determine that if the channel-carrier-frequency of the third party device is not reliable, only a subset of the subcarriers are to be used as opposed to also those on the extreme, less controlled ends of the channel.

The suitability, in particular, its reliability and/or trust level, of a third party device for specific radiofrequency sensing tasks may also evolve over time. Most smart devices can be updated wirelessly, and this can be used to enable/unlock new sources of signal-quality-related information at network level. For example, a previously unidentified third party device can, after an Over the Air Update (OTAU), label itself as a gaming console, potentially sharing the same radiofrequency functionalities as smart TVs. Thus, in this case the third party device can be classified and treated accordingly.

Moreover, different vendors might choose to enable partnerships such that their devices are configured to cooperate better when they are placed in the same radiofrequency sensing deployment. In such a case, an radiofrequency sensing group up to now only using network devices from one vendor might be informed that a specific set of smart fridges from another vendor, such as the one available in a specific home, actually shows a quite uniform radiofrequency propagation pattern as opposed to the generalized assumptions about fridges and are thus to be regarded as reliable. The apparatus can then be adapted to determine a potential contribution and its reliability again based on this updated information.

In an embodiment, the apparatus can also rely on a user for confirmation of a contribution, reliability and/or trust level of a third party device. For example, the apparatus can be adapted to ask the user to classify or identify a potential third party device so the decision process about whether and how to include it into the radiofrequency sensing group can be based on the user input. Alternatively or additionally, in a more practical fashion, the apparatus can be adapted to request the user to perform some basic actions to validate what it can expect from such a third party device, for example, to determine a reliability of the third party device. For example, it can ask, when possible, that the user moves to a room adjacent to the one where the smart TV or Amazon Echo as potential third party device is placed and move around. The apparatus can the utilize simultaneously measure radiofrequency signals and determine, for example, whether the first assumption of that the third party device may be excessively picking up false positives from the adjacent room, is actually valid and thus the reliability indeed very low. The results of such the measurement can then be utilized by the controlling unit when controlling the adding of the third party device, for instance, by adjust respective selection preferences. If from a performance measurement the apparatus can concluded the reason that a third party device cannot positively contribute to the radiofrequency sensing mode, for instance, because of the third party device's placement, it can also be adapted to ask the user to, if possible, remove this reason, for example, relocate the third party device.

Below described are some possible additions to the above described embodiments. For example, not all information about third party devices might be available over an ethernet communication. Thus, for instance, the contribution determination unit can be adapted to also use side channels information, e.g. if the third party device also provides a Bluetooth low energy communication, information on a software version, etc. of the third party device can be provided in this way, or if the third party device provides CHIP, information on the device, e.g. type, firmware version, etc., can be provided in this way. Moreover, the contribution determination unit can also be adapted to dynamically determine and, if necessary, update a reliability and/or trust level of a potential contribution functionality, for example, if a specific variation is seen over time, or if it is expected that the device might have received a firmware update that could improve the performance.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the determining of the critical sensing functionality, the determining of the potential contribution, the adding of the third party device, etc., performed by one or several units or devices can be performed by any other number of units or devices. These procedures can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The present invention refers to an apparatus that allows for the controlling of an adding of a third party device to a sensing group to improve the sensing. The sensing group consists of network devices performing radiofrequency sensing. The third party device provides a functionality that contributes to the sensing of the sensing group. The apparatus comprises a determination unit for determining a critical sensing functionality, a determination unit for determining a potential contribution that the functionality of the third party device can provide to the radiofrequency sensing, when the third party device is added to the sensing group, and a controlling unit for controlling the adding of the third party device to the sensing group based on the critical sensing functionality and the potential contribution.

## Claims

1. An apparatus for controlling an adding of a third party device (121) to a radiofrequency sensing group (110), wherein the radiofrequency sensing group (110) consists of a plurality of network devices (111, 112, 113) performing radiofrequency sensing in an area, wherein the third party device (121) is adapted to provide a functionality that allows to contribute to a radiofrequency sensing of the radiofrequency sensing group (110), wherein the apparatus (130) is **characterized by** comprising:
a critical sensing functionality determination unit (131) for determining a critical sensing functionality for the radiofrequency sensing currently performed by the radiofrequency sensing group (110),
a contribution determination unit (132) for determining a potential contribution that the functionality of the third party device (121) can provide to the radiofrequency sensing of the radiofrequency sensing group (110), when the third party device (121) is added to the radiofrequency sensing group (110), and
a controlling unit (133) for controlling the adding of the third party device (121) to the radiofrequency sensing group (110) based on the determined critical sensing functionality and the determined potential contribution to the radiofrequency sensing of the radiofrequency sensing group (110).

2. The apparatus according to claim 1, wherein the determination of a potential contribution of the functionality of the third party device (121) to the radiofrequency sensing of the radiofrequency sensing group (110) comprises assessing a reliability of the potential contribution of the third party device (121), wherein the controlling unit (133) is adapted to control the adding of the third party device (121) further based on the reliability.

3. The apparatus according to claim 2, wherein the reliability of the potential contribution of the third party device (121) is determined based on measurements of characteristics of the functionality referring to the potential contribution.

4. The apparatus according to any of claims 2 and 3, wherein the contribution determination unit (132) is adapted to determine the reliability of the potential contribution of the functionality in cooperation with a user, wherein the contribution determination unit (132) is adapted to provide instructions to the user to be performed during the cooperation.

5. The apparatus according to any of claims 2 to 4, wherein the reliability of the potential contribution of the third party device (121) is determined based on a classification of the third party device (121), wherein the potential contribution determination unit (132) is adapted to classify the third party device (121) into a set of predetermined device archetypes, wherein each device archetype represents a group (110) of radiofrequency capable devices with similar characteristics of respective functionalities.

6. The apparatus according to claim 5, wherein the archetype classification is based on characteristics of the functionality that have an impact on a radiofrequency sensing performed based on radiofrequency signals provided by the third party device (121).

7. The apparatus according to any of the preceding claims, wherein the potential contribution determination unit (132) further comprises determining a trust level for the third party device (121), wherein the trust level is indicative of a data security and/or stability provided by the third party device (121), wherein the controlling unit (133) is adapted to control the adding of the third party device (121) further based on the trust level.

8. The apparatus according to any of the preceding claims, wherein the radiofrequency sensing group (110) is adapted to perform the radiofrequency sensing based on different radiofrequency sensing algorithms related to different intended sensing purposes, wherein the critical sensing functionality is determined with respect to a currently utilized sensing algorithm.

9. The apparatus according to claim 8, wherein the critical sensing functionality determination unit (131) is adapted to utilize a mapping between sensing algorithms and sensing functionalities critical for the respective sensing algorithms for determining the critical sensing functionality.

10. The apparatus according to any of the preceding claims, wherein the critical sensing functionality can refer to any of a stability of a RSSI and/or a CSI signal over time, a directionality and/or sensitivity of radiation patterns, a stability of an amplitude and/or a phase of a radiofrequency signal, and a stability of a transmit channel or sub-channel frequency and/or bandwidth.

11. The apparatus according to any of the preceding claims, wherein the controlling comprises determining whether or not the third party device (121) is added to the radiofrequency sensing group (110) and, if the third party device (121) is added, which of the determined potential contributions are to be utilized when the third party device (121) is added to the radiofrequency sensing group (110).

12. The apparatus according to any of the preceding claims, wherein the apparatus (130) further comprises a storing unit adapted for storing already determined information on a potential contribution of a third party device (121), wherein the storing unit is adapted to update the stored information if an external event indicates a possible change of the stored information.

13. A network comprising:
a plurality of network devices (111, 112, 113) including a third party device (121), wherein at least a part of the plurality of the network devices (111, 112, 113) forms a radiofrequency sensing group (110) performing radiofrequency sensing in an area, and
an apparatus (130) according to any of the preceding claims.

14. A method for controlling an adding of a third party device (121) to a radiofrequency sensing group (110), wherein the radiofrequency sensing group (110) consists of a plurality of network devices (111, 112, 113) performing radiofrequency sensing in an area, wherein the third party device (121) is adapted to provide a functionality that allows to contribute to a radiofrequency sensing of the radiofrequency sensing group (110), wherein the method (200) is **characterized by** comprising:
determining (210) a critical sensing functionality for the radiofrequency sensing currently performed by the radiofrequency sensing group (110),
determining (220) a potential contribution that the functionality of the third party device (121) can provide to the radiofrequency sensing of the radiofrequency sensing group (110), when the third party device (121) is added to the radiofrequency sensing group (110), wherein the potential contribution refers to a functionality provided by the third party device (121), and
controlling (230) the adding of the third party device (121) to the radiofrequency sensing group (110) based on the determined critical sensing functionality and the determined potential contribution to the radiofrequency sensing of the radiofrequency sensing group (110).

15. A computer program product for controlling an adding of a third party device (121) to a radiofrequency sensing group (110), wherein the computer program product is adapted to cause a processor integrated in an apparatus (130) according to claim 1 to perform all the method steps of claim 14 when the program is executed on the processor.

## Patentansprüche

1. Einrichtung zum Steuern des Hinzufügens einer Drittvorrichtung (121) zu einer Hochfrequenzerfassungsgruppe (110), wobei die Hochfrequenzerfassungsgruppe (110) aus einer Vielzahl von Netzwerkvorrichtungen (111, 112, 113) besteht, die Hochfrequenzerfassung in einem Bereich durchführen, wobei die Drittvorrichtung (121) angepasst ist, um eine Funktionalität bereitzustellen, die es ermöglicht, zu einer Hochfrequenzerfassung der Hochfrequenzerfassungsgruppe (110) beizutragen, wobei die Vorrichtung (130) **dadurch gekennzeichnet ist, dass** sie besteht aus:
einer Bestimmungseinheit für eine kritische Sensorfunktionalität (131) zum Bestimmen einer kritischen Erfassungsfunktionalität für die aktuell von der Hochfrequenzerfassungsgruppe (110) durchgeführte Hochfrequenzerfassung,
einer Beitragsbestimmungseinheit (132) zum Bestimmen eines potenziellen Beitrags, den die Funktionalität der Drittvorrichtung (121) zur Hochfrequenzerfassung der Hochfrequenzerfassungsgruppe (110) leisten kann, wenn die Drittvorrichtung (121) zur Hochfrequenzerfassungsgruppe (110) hinzugefügt wird, und
einer Steuereinheit (133) zum Steuern des Hinzufügens der Drittvorrichtung (121) zu der Hochfrequenzerfassungsgruppe (110) basierend auf der ermittelten kritischen Erfassungsfunktionalität und dem ermittelten potenziellen Beitrag zur Hochfrequenzerfassung der Hochfrequenzerfassungsgruppe (110).

2. Einrichtung nach Anspruch 1, wobei das Bestimmen eines potenziellen Beitrags der Funktionalität der Drittvorrichtung (121) zur Hochfrequenzerfassung der Hochfrequenzerfassungsgruppe (110) das Bewerten einer Zuverlässigkeit des potenziellen Beitrags der Drittvorrichtung (121) umfasst, wobei die Steuereinheit (133) dazu geeignet ist, das Hinzufügen der Drittvorrichtung (121) ferner basierend auf der Zuverlässigkeit zu steuern.

3. Einrichtung nach Anspruch 2, wobei die Zuverlässigkeit des potentiellen Beitrags der Drittvorrichtung (121) auf der Grundlage von Messungen von Charakteristiken der Funktionalität, die sich auf den potentiellen Beitrag beziehen, bestimmt wird.

4. Einrichtung nach einem der Ansprüche 2 und 3, wobei die Beitragsbestimmungseinheit (132) dazu geeignet ist, die Zuverlässigkeit des potenziellen Beitrags der Funktionalität in Zusammenarbeit mit einem Benutzer zu bestimmen, wobei die Beitragsbestimmungseinheit (132) dazu geeignet ist, dem Benutzer Anweisungen bereitzustellen, die während der Zusammenarbeit ausgeführt werden sollen.

5. Einrichtung nach einem der Ansprüche 2 bis 4, wobei die Zuverlässigkeit des potenziellen Beitrags der Drittvorrichtung (121) basierend auf einer Klassifizierung der Drittvorrichtung (121) bestimmt wird, wobei die Einheit (132) zum Bestimmen des potenziellen Beitrags dazu geeignet ist, die Drittvorrichtung (121) in einen Satz vorgegebener Vorrichtungsarchetypen zu klassifizieren, wobei jeder Vorrichtungsarchetyp eine Gruppe (110) hochfrequenzfähiger Vorrichtungen mit ähnlichen Eigenschaften jeweiliger Funktionalitäten darstellt.

6. Einrichtung nach Anspruch 5, wobei die Archetypenklassifizierung auf Merkmalen der Funktionalität basiert, die sich auf eine Hochfrequenzerfassung auswirken, die auf der Grundlage von Hochfrequenzsignalen durchgeführt wird, die von der Drittvorrichtung (121) bereitgestellt werden.

7. Einrichtung nach einem der vorstehenden Ansprüche, wobei die Einheit (132) zum Bestimmen eines potentiellen Beitrags ferner die Bestimmung einer Vertrauensstufe für die Drittvorrichtung (121) umfasst, wobei die Vertrauensstufe eine Anzeige für die Datensicherheit und/oder -stabilität ist, die durch die Drittvorrichtung (121) bereitgestellt wird, wobei die Steuereinheit (133) dazu geeignet ist, das Hinzufügen der Drittvorrichtung (121) ferner basierend auf der Vertrauensstufe zu steuern.

8. Einrichtung nach einem der vorstehenden Ansprüche, wobei die Hochfrequenzerfassungsgruppe (110) dazu ausgebildet ist, die Hochfrequenzerfassung basierend auf unterschiedlichen Hochfrequenzerfassungsalgorithmen durchzuführen, die sich auf unterschiedliche beabsichtigte Erfassungszwecke beziehen, wobei die kritische Erfassungsfunktionalität in Bezug auf einen aktuell verwendeten Erfassungsalgorithmus bestimmt wird.

9. Einrichtung nach Anspruch 8, wobei die Einheit (131) zum Bestimmen der kritischen Erfassungsfunktionalität dazu ausgebildet ist, eine Zuordnung zwischen Erfassungsalgorithmen und Erfassungsfunktionalitäten, die für die jeweiligen Erfassungsalgorithmen kritisch sind, zum Bestimmen der kritischen Erfassungsfunktionalität zu verwenden.

10. Einrichtung nach einem der vorstehenden Ansprüche, wobei sich die kritische Erfassungsfunktionalität auf eine Stabilität eines RSSI- und/oder CSI-Signals über die Zeit, eine Richtung und/oder Empfindlichkeit von Strahlungsmustern, eine Stabilität einer Amplitude und/oder einer Phase eines Hochfrequenzsignals und eine Stabilität einer Frequenz und/oder Bandbreite eines Sendekanals oder Unterkanals beziehen kann.

11. Einrichtung nach einem der vorstehenden Ansprüche, wobei das Steuern das Bestimmen umfasst, ob die Drittvorrichtung (121) zu der Hochfrequenzerfassungsgruppe (110) hinzugefügt wird oder nicht, und, falls die Drittvorrichtung (121) hinzugefügt wird, welche der bestimmten potentiellen Beiträge genutzt werden sollen, wenn die Drittvorrichtung (121) zu der Hochfrequenzerfassungsgruppe (110) hinzugefügt wird.

12. Einrichtung nach einem der vorstehenden Ansprüche, wobei die Vorrichtung (130) ferner eine Speichereinheit umfasst, die zum Speichern bereits ermittelter Informationen zu einem möglichen Beitrag einer Drittvorrichtung (121) angepasst ist, wobei die Speichereinheit zum Aktualisieren der gespeicherten Informationen angepasst ist, wenn ein externes Ereignis auf eine mögliche Änderung der gespeicherten Informationen hinweist.

13. Netzwerk, umfassend:
eine Vielzahl von Netzwerkvorrichtungen (111, 112, 113), einschließlich einer Drittvorrichtung (121), wobei mindestens ein Teil der Vielzahl der Netzwerkvorrichtungen (111, 112, 113) eine Hochfrequenzerfassungsgruppe (110) bildet, die Hochfrequenzerfassung in einem Bereich durchführt, und
eine Einrichtung (130) nach einem der vorstehenden Ansprüche.

14. Verfahren zum Steuern des Hinzufügens einer Drittvorrichtung (121) zu einer Hochfrequenzerfassungsgruppe (110), wobei die Hochfrequenzerfassungsgruppe (110) aus einer Vielzahl von Netzwerkvorrichtungen (111, 112, 113) besteht, die Hochfrequenzerfassung in einem Bereich durchführen, wobei die Drittvorrichtung (121) angepasst ist, um eine Funktionalität bereitzustellen, die es ermöglicht, zu einer Hochfrequenzerfassung der Hochfrequenzerfassungsgruppe (110) beizutragen, wobei das Verfahren (200) **dadurch gekennzeichnet ist, dass** sie besteht aus:
Bestimmen (210) einer kritischen Erfassungsfunktionalität für die aktuell von der Hochfrequenzerfassungsgruppe (110) durchgeführte Hochfrequenzerfassung,
Bestimmen (220) eines potenziellen Beitrags, den die Funktionalität der Drittvorrichtung (121) zur Hochfrequenzerfassung der Hochfrequenzerfassungsgruppe (110) leisten kann, wenn die Drittvorrichtung (121) zur Hochfrequenzerfassungsgruppe (110) hinzugefügt wird, wobei sich der potenzielle Beitrag auf eine von der Drittvorrichtung (121) bereitgestellte Funktionalität bezieht, und
Steuern (230) des Hinzufügens der Drittvorrichtung (121) zu der Hochfrequenzerfassungsgruppe (110) basierend auf der ermittelten kritischen Erfassungsfunktionalität und dem ermittelten potenziellen Beitrag zur Hochfrequenzerfassung der Hochfrequenzerfassungsgruppe (110).

15. Computerprogrammprodukt zum Steuern des Hinzufügens einer Drittvorrichtung (121) zu einer Hochfrequenzerfassungsgruppe (110), wobei das Computerprogrammprodukt dazu angepasst ist, einen in einer Einrichtung (130) nach Anspruch 1 integrierten Prozessor zu veranlassen, alle Verfahrensschritte nach Anspruch 14 auszuführen, wenn das Programm auf dem Prozessor ausgeführt wird.

## Revendications

1. Appareil permettant de commander un ajout d'un dispositif tiers (121) à un groupe de détection de radiofréquence (110), dans lequel le groupe de détection de radiofréquence (110) est constitué d'une pluralité de dispositifs réseau (111, 112, 113) mettant en œuvre une détection de radiofréquence dans une zone, dans lequel le dispositif tiers (121) est conçu pour fournir une fonctionnalité qui permet de contribuer à une détection de radiofréquence du groupe de détection de radiofréquence (110), dans lequel l'appareil (130) est **caractérisé en ce qu'**il comprend :
une unité de détermination de fonctionnalité de détection critique (131) permettant de déterminer une fonctionnalité de détection critique pour la détection de radiofréquence actuellement mise en œuvre par le groupe de détection de radiofréquence (110),
une unité de détermination de contribution (132) permettant de déterminer une contribution potentielle que la fonctionnalité du dispositif tiers (121) peut fournir à la détection de radiofréquence du groupe de détection de radiofréquence (110), lorsque le dispositif tiers (121) est ajouté au groupe de détection de radiofréquence (110), et
une unité de commande (133) permettant de commander l'ajout du dispositif tiers (121) au groupe de détection de radiofréquence (110) en fonction de la fonctionnalité de détection critique déterminée et de la contribution potentielle déterminée à la détection de radiofréquence du groupe de détection de radiofréquence (110).

2. Appareil selon la revendication 1, dans lequel la détermination d'une contribution potentielle de la fonctionnalité du dispositif tiers (121) à la détection de radiofréquence du groupe de détection de radiofréquence (110) comprend l'évaluation d'une fiabilité de la contribution potentielle du dispositif tiers (121), dans lequel l'unité de commande (133) est conçue pour commander l'ajout du dispositif tiers (121) en fonction en outre de la fiabilité.

3. Appareil selon la revendication 2, dans lequel la fiabilité de la contribution potentielle du dispositif tiers (121) est déterminée en fonction de mesures de caractéristiques de la fonctionnalité en référence à la contribution potentielle.

4. Appareil selon l'une quelconque des revendications 2 et 3, dans lequel l'unité de détermination de contribution (132) est conçue pour déterminer la fiabilité de la contribution potentielle de la fonctionnalité en coopération avec un utilisateur, dans lequel l'unité de détermination de contribution (132) est conçue pour fournir des instructions à l'utilisateur devant être mises en œuvre pendant la coopération.

5. Appareil selon l'une quelconque des revendications 2 à 4, dans lequel la fiabilité de la contribution potentielle du dispositif tiers (121) est déterminée en fonction d'une classification du dispositif tiers (121), dans lequel l'unité de détermination de contribution potentielle (132) est conçue pour classer le dispositif tiers (121) dans un ensemble d'archétypes de dispositif prédéterminés, dans lequel chaque archétype de dispositif représente un groupe (110) de dispositifs à capacité radiofréquence avec des caractéristiques similaires de fonctionnalités respectives.

6. Appareil selon la revendication 5, dans lequel la classification en archétypes est en fonction de caractéristiques de la fonctionnalité qui ont un impact sur une détection de radiofréquence mise en œuvre en fonction de signaux de radiofréquence fournis par le dispositif tiers (121).

7. Appareil selon l'une quelconque des revendications précédentes, dans lequel l'unité de détermination de contribution potentielle (132) comprend en outre la détermination d'un niveau de confiance pour le dispositif tiers (121), dans lequel le niveau de confiance indique une sécurité et/ou une stabilité de données fournies par le dispositif tiers (121), dans lequel l'unité de commande (133) est conçue pour commander l'ajout du dispositif tiers (121) en fonction en outre du niveau de confiance.

8. Appareil selon l'une quelconque des revendications précédentes, dans lequel le groupe de détection de radiofréquence (110) est conçu pour mettre en œuvre la détection de radiofréquence en fonction de différents algorithmes de détection de radiofréquence apparentés à différents objectifs de détection prévus, dans lequel la fonctionnalité de détection critique est déterminée par rapport à un algorithme de détection actuellement utilisé.

9. Appareil selon la revendication 8, dans lequel l'unité de détermination de fonctionnalité de détection critique (131) est conçue pour utiliser un mappage entre des algorithmes de détection et des fonctionnalités de détection critiques pour les algorithmes de détection respectifs permettant de déterminer la fonctionnalité de détection critique.

10. Appareil selon l'une quelconque des revendications précédentes, dans lequel la fonctionnalité de détection critique peut faire référence à l'une quelconque parmi une stabilité d'un signal RSSI et/ou CSI au fil du temps, une directionnalité et/ou une sensibilité de schémas de rayonnement, une stabilité d'une amplitude et/ou d'une phase d'un signal radiofréquence, et une stabilité d'une fréquence et/ou largeur de bande de canal ou sous-canal de transmission.

11. Appareil selon l'une quelconque des revendications précédentes, dans lequel la commande comprend le fait de déterminer si le dispositif tiers (121) est ou non ajouté au groupe de détection de radiofréquence (110) et, si le dispositif tiers (121) est ajouté, les contributions potentielles déterminées qui doivent être utilisées lorsque le dispositif tiers (121) est ajouté au groupe de détection de radiofréquence (110).

12. Appareil selon l'une quelconque des revendications précédentes, dans lequel l'appareil (130) comprend en outre une unité de stockage conçue pour stocker des informations déjà déterminées concernant une contribution potentielle d'un dispositif tiers (121), dans lequel l'unité de stockage est conçue pour mettre à jour les informations stockées si un événement externe indique un changement possible des informations stockées.

13. Réseau comprenant :
une pluralité de dispositifs réseau (111, 112, 113) comportant un dispositif tiers (121), dans lequel au moins une partie de la pluralité des dispositifs réseau (111, 112, 113) forme un groupe de détection de radiofréquence (110) mettant en œuvre une détection de radiofréquence dans une zone, et
un appareil (130) selon l'une quelconque des revendications précédentes.

14. Procédé permettant de commander un ajout d'un dispositif tiers (121) à un groupe de détection de radiofréquence (110), dans lequel le groupe de détection de radiofréquence (110) est constitué d'une pluralité de dispositifs réseau (111, 112, 113) mettant en œuvre une détection de radiofréquence dans une zone, dans lequel le dispositif tiers (121) est conçu pour fournir une fonctionnalité qui permet de contribuer à une détection de radiofréquence du groupe de détection de radiofréquence (110), dans lequel le procédé (200) est **caractérisé en ce qu'**il comprend :
la détermination (210) d'une fonctionnalité de détection critique pour la détection de radiofréquence actuellement mise en œuvre par le groupe de détection de radiofréquence (110),
la détermination (220) d'une contribution potentielle que la fonctionnalité du dispositif tiers (121) peut fournir à la détection de radiofréquence du groupe de détection de radiofréquence (110), lorsque le dispositif tiers (121) est ajouté au groupe de détection de radiofréquence (110), dans lequel la contribution potentielle fait référence à une fonctionnalité fournie par le dispositif tiers (121), et
la commande (230) de l'ajout du dispositif tiers (121) au groupe de détection de radiofréquence (110) en fonction de la fonctionnalité de détection critique déterminée et de la contribution potentielle déterminée à la détection de radiofréquence du groupe de détection de radiofréquence (110).

15. Produit programme informatique permettant de commander un ajout d'un dispositif tiers (121) à un groupe de détection de radiofréquence (110), dans lequel le produit programme informatique est conçu pour amener un processeur intégré dans un appareil (130) selon la revendication 1 à mettre en œuvre toutes les étapes de procédé selon la revendication 14 lorsque le programme est exécuté sur le processeur.
